# EUROPÄISCHE PATENTSCHRIFT

(11) **EP 2 376 817 B1**
(45) Veröffentlichungstag und Bekanntmachung des Hinweises auf die Patenterteilung: **22.10.2014**
(21) Anmeldenummer: 09760865.7
(22) Anmeldetag: 27.11.2009
(51) Int. Cl.: F16H 63/20, F16H 57/027, F16H 63/30, F16H 63/38

(54) **KUNSTSTOFFGETRIEBEABDECKUNG UND SCHALTDOMBAUEINHEIT MIT DER KUNSTSTOFFGETRIEBEABDECKUNG**
PLASTIC TRANSMISSION COVER, AND GEAR-SHIFT TOWER UNIT HAVING THE PLASTIC TRANSMISSION COVER
COUVERCLE DE CHANGEMENT DE VITESSE EN MATIÈRE PLASTIQUE ET MODULE DE DÔME DE CHANGEMENT DE VITESSE AVEC LE COUVERCLE DE CHANGEMENT DE VITESSE EN MATIÈRE PLASTIQUE

(30) Priorität: 11.12.2008 DE 102008061894
(43) Veröffentlichungstag der Anmeldung: 19.10.2011
(73) Patentinhaber: Schaeffler Technologies GmbH & Co. KG, 91074 Herzogenaurach (DE)
(72) Erfinder: BECK, Tino, 96138 Burgebrach (DE); JAUERNIG, Dieter, 91074 Herzogenaurach (DE); MAIER, Waldemar, 91074 Herzogenaurach (DE)
(86) Internationale Anmeldenummer: PCT/EP2009/065946
(87) Internationale Veröffentlichungsnummer: WO 2010/066594

(56) Entgegenhaltungen:
- EP-A1- 1 965 102
- EP-A2- 0 394 556
- WO-A1-2007/064221
- WO-A2-2009/153111
- WO-A2-2009/153118
- WO-A2-2009/153119
- DE-A1- 3 606 052
- DE-A1- 10 064 918
- DE-A1- 19 948 422
- DE-A1-102005 010 001

## Beschreibung

### Bezeichnung der Erfindung

### Gebiet der Erfindung

Die Erfindung betrifft eine Kunststoffgetriebeabdeckung zur Abdeckung eines Schaltgetriebes für ein Fahrzeuges mit einem Gehäuseabschnitt, wobei der Gehäuseabschnitt einen Innenraum des Schaltgetriebes von einem Umgebungsraum trennt und wobei der Gehäuseabschnitt eine Aufnahme für eine Funktionseinheit des Schaltgetriebes bildet, welche zumindest abschnittsweise bei einem Wähl- und/oder Schaltvorgang des Schaltgetriebes bewegt wird. Die Erfindung betrifft auch eine Schaltdombaueinheit mit dieser Kunststoffgetriebeabdeckung.

Bei Schaltgetrieben von Fahrzeugen ist oftmals ein Schaltdom vorgesehen, in dem eine Schaltwelle zur Übertragung von Schalt- und/oder Wählbewegungen gelagert ist. Ein derartiger Schaltdom weist üblicherweise eine Abdeckung auf, die den Getriebeinnenraum mit Ölsumpfatmosphäre von einem weitgehend ölfreien Umgebungsraum trennt.

Beispielsweise offenbart die Offenlegungsschrift DE 199 48 422 A1 eine Schalteinrichtung eines Getriebes mit mindestens einer längsverschiebbar und/oder schwenkbar in einem Gehäuse angeordneten Übertragungswelle zum Übertragen von Wähl- und/oder Schaltbewegungen. Die Schalteinrichtung weist einen Deckel mit einer Rastkontur auf, wobei mit der Rastkontur ein an der Übertragungswelle angeordnetes Rastelement zusammenwirkt. In dem Deckel sind beispielsweise Aufnahmen für eine Lagerung der Übertragungswelle angeordnet.

Die Druckschrift DE 100 649 18 A1 offenbart einen ähnlichen Schaltdom für ein Getriebe, wobei das Schaltdomgehäuse im Wesentlichen topfartig ausgebildet ist und mittels eines Deckels verschlossen wird, der sich am Schaltdomgehäuse abstützt. Gemäß der Beschreibung kann der Deckel auch als Kunststoffteil hergestellt sein.

DE 10 2005 010 001 A1, welche alle Merkmale des Oberbegriffs des Anspruchs 1 offenbart, zeigt eine Arretierung, die in eine Kunststoffgetriebeabdeckung integriert ist. Die Arretierung ist in den Kunststoff eingegossen oder integral mit der Kunststoffgetriebeabdeckung hergestellt. Bei der Spritzgussherstellung muss einerseits die Funktionsfähigkeit der Arretierung sichergestellt bleiben und andererseits sichergestellt werden, dass sich die Arretierung bei den unterschiedlichen Betriebstemperaturen sicher gehalten ist. Dies macht den Herstellungsprozess aufwendig.

### Beschreibung

Der Erfindung liegt die Aufgabe zugrunde, eine Kunststoffgetriebeabdeckung sowie eine Schaltdombaueinheit mit einer derartigen Kunststoffgetriebeabdeckung vorzuschlagen, welche sich durch ein verbessertes Funktionsverhalten auszeichnen und die sich auf einfache Weise herstellen lassen.

Diese Aufgabe wird durch eine Kunststoffgetriebeabdeckung mit den Merkmalen des Anspruchs 1 sowie durch eine Schaltdombaueinheit mit den Merkmalen des Anspruchs 6 gelöst. Besondere Ausführungsarten der Erfindung sind den Unteransprüchen zu entnehmen.

Bevorzugte oder vorteilhafte Ausführungsformen der Erfindung ergeben sich aus der nachfolgenden Beschreibung sowie den beigefügten Figuren.

Im Rahmen der Erfindung wird eine Kunststoffgetriebeabdeckung zur Abdeckung eines Schaltgetriebes eines Fahrzeugs vorgeschlagen. Die Kunststoffgetriebeabdeckung ist aus einem vorzugsweise verstärkten, insbesondere glasfaserverstärkten Kunststoff, gefertigt und optional im Spritzgussverfahren hergestellt. Sie dient zur Abdeckung eines Schaltgetriebes, insbesondere eines Zahnräderwechselgetriebe für ein Fahrzeug.

Die Kunststoffgetriebeabdeckung weist einen Gehäuseabschnitt auf, wobei der Gehäuseabschnitt einen Innenraum des Schaltgetriebes von einem Umgebungsraum trennt. Unter einem Innenraum wird bevorzugt ein Raum mit Ölsumpfatmosphäre oder einer anderen Schmierstoffalmosphäre verstanden, welche kommunizierend mit einem Aufnahmeraum des Schaltgetriebes verbunden ist. Unter einem Umgebungsraum wird vorzugsweise ein Bereich verstanden, welcher außerhalb von der Ölsumpf- bzw. Schmierstoffatmosphäre angeordnet ist. Der Gehäuseabschnitt ist bevorzugt einstückig und/oder einmaterialig mit der Kunststoffgetriebeabdeckung verbunden und/oder aus Kunststoff gefertigt.

Der Gehäuseabschnitt bildet eine Aufnahme, insbesondere eine Halterung, für eine Funktionseinheit des Schaltgetriebes, welche zumindest abschnittsweise, insbesondere teilweise, bei einem Wähl- und/oder Schaltvorgang des Schaltgetriebes bewegt wird. Die Bewegung der Funktionseinheit bzw. Teilen davon ist bevorzugt nicht-seriell in der kinematischen Kette zur Übertragung der Schaltund/oder Wählbewegung von einem Benutzer und/oder Aktor zu dem Schaltgetriebe ausgebildet. Bevorzugt erfolgt die Bewegung parallel bzw. mitgeführt zu der kinematischen Kette und/oder verbindet die kinematische Kette mit einem stationären Gestellglied.

Erfindungsgemäß wird offenbart, dass die Aufnahme einstückig, insbesondere einmaterialig, in dem Gehäuseabschnitt eingebracht ist. Bevorzugt ist die Aufnahme in den Gehäuseabschnitt, insbesondere durch einen Urformvorgang, eingeformt. Die Aufnahme öffnet sich ausschließlich zu dem bzw. in den Innenraum.

Es ist dabei eine Überlegung der Erfindung, Durchgangsöffnungen durch den Gehäuseabschnitt zwischen Innenraum und Umgebungsraum weitgehend zu vermeiden. Derartige Durchgangsöffnungen stellen zum einen eine erhöhte Anforderung bei der Fertigung bzw. der Montage der Kunststoffgetriebeabdeckung dar, da diese zuverlässig abgedichtet werden müssen. Zum zweiten sind Durchgangsöffnungen stets eine mögliche Fehlerquelle für Leckagen. Im Rahmen der Erfindung wird deshalb vorgeschlagen, bei der Aufnahme für die Funktionseinheit derartige Durchgangsöffnungen nach außen zu vermeiden und die Aufnahme ausschließlich durch den Innenraum zugänglich zu machen. Der Vorteil der Erfindung liegt in einem verringerten Montageaufwand sowie aufgrund der fehlenden Fehlerquelle der Durchgangsöffnungen in einem verbesserten Funktionsverhalten der Kunststoffgetriebeabdeckung.

Bei einer bevorzugten Ausführungsform der Erfindung umfasst die Kunststoffgetriebeabdeckung eine Arretierung, die insbesondere die Schalt- und/oder Wählkrafteinstellung der Schaltwelle arretiert, als die Funktionseinheit. Die Arretierung umfasst bevorzugt ein längsverschiebbares Tastelement, welches für ein Abfahren einer Rastkontur geeignet und/oder ausgebildet ist. Bei Wählund/oder Schaltvorgängen fährt das Tastelement der Arretierung die Rastkontur ab und wird dabei in Längsrichtung bewegt.

Bei einer bevorzugten Weiterbildung der Erfindung ist die Arretierung als eine Baugruppe realisiert, welche einen stationären Abschnitt und einen bewegbaren Abschnitt aufweist, wobei der stationäre Abschnitt stationär in der Aufnahme aufgenommen ist und der bewegbare Abschnitt in dem stationären Abschnitt gelagert und/oder geführt ist. Bei dieser Weiterbildung kann die Arretierung als Baugruppe mit einem geringen Montageaufwand in die Aufnahme eingesetzt, insbesondere eingepresst, werden.

Bei einer konstruktiven Realisierung ist die Aufnahme sacklochartig ausgebildet, wobei der Ausgang des Sacklochs in den Innenraum gerichtet ist. Der Querschnitt senkrecht zur Tiefenerstreckung der sacklochartigen Aufnahme kann beliebig ausgebildet sein, beispielsweise oval, kreuzförmig, rund, elliptisch etc. In Tiefenerstreckung kann der Querschnitt der Aufnahme konstant oder im Wesentlichen konstant ausgebildet sein oder sich bevorzugt konvergierend verändern. Besonders bevorzugt bildet die Aufnahme eine hohlzylindrische und/oder konusförmige Halterung. Bei der Halterung ist es auch ausreichend, wenn das Funktionsteil über Halterungsbereiche oder - im Querschnitt senkrecht zur Tiefenerstreckung betrachtet - über Halterungspunkte bzw. - strecken berührend festgelegt ist.

Insbesondere mit dem Ziel eines minimierten Materialaufwands ist es bevorzugt, wenn der Gehäuseabschnitt zur Bildung der Aufnahme in den Umgebungsraum gegenüber der Kunststoffgetriebeabdeckung auskragend ausgebildet ist. Beispielsweise ist der Gehäuseabschnitt turmartig auskragend realisiert, wobei optional kunststoffgerecht Verstärkungsrippen zwischen Gehäuseabschnitt und Kunststoffgetriebeabdeckung in dem Umgebungsraum vorgesehen sein können.

Nach einer bevorzugten Weiterbildung der Erfindung sind an den Wänden der Aufnahme Mittel zur kraft- und/oder reibschlüssigen Festlegung der Funktionseinheit und/oder zur Entlüftung der Aufnahme, insbesondere des Sacklochgrundes angeordnet. Diese Weiterbildung unterstützt nochmals das erfinderische Streben, eine einfache Montage zu erlauben, indem die Funktionseinheit in die Aufnahme eingeführt, insbesondere eingepresst, wird, wobei aufnahmeseitige Mittel zur Festlegung der Funktionseinheit vorgesehen sind. Bevorzugt sind diese Mittel bereits bei der Fertigung, insbesondere im Urformvorgang, der Kunststoffgetriebeabdeckung integriert worden. Die Mittel zur Entlüftung der Aufnahme dienen dazu, einen Endraum, welcher möglicherweise durch den Einbau der Funktionseinheit ansonsten als totes Volumen von dem Innenraum abgeschlossen wäre, zu entlüften, so dass eine Vakuum- oder Überdruckbildung in diesem Endraum vermieden wird.

Bei einer möglichen konstruktiven Realisierung sind an den Innenwänden der Aufnahme Stege angeformt, welche in Tiefenerstreckung der Aufnahme verlaufen und die die Funktionseinheit kraft- und/oder reibschlüssig halten bzw. als die Mittel ausgebildet sind. Derartige Stege weisen den Vorteil auf, dass sie bei einem Einpressen der Funktionseinheit einfach deformierbar sind und auf diese Weise Fertigungstoleranzen ausgleichen können, wobei die Zwischenräume zwischen den Stegen zugleich als Mittel zur Entlüftung dienen.

Bei einer möglichen konstruktiven Realisierung der Weiterbildung kann eine Verriegelungsschiene zur Verriegelung von Schaltschienen ausgebildet sein. Eine derartige Verriegelungsschiene weist korrespondierend zu den Schaltschienen Randaussparungen auf, wobei je nach Position der Verriegelungsschiene Schaltschienen gesperrt oder verschiebbar sind.

Ein Führungskanalkann die Verriegelungsschiene aufnehmen.

Aus fertigungstechnischen Gründen ist es nicht möglich, einen umlaufend geschlossenen Führungskanal durch einen Urformvorgang, beispielsweise durch einen Spritzgussvorgang, zu erzeugen. Um nun eine verliersichere Führung der Verriegelungsschiene zu gewährleisten, weist die Kunststoffgetriebeabdeckung bei eingelegter Verriegelungsschiene einen zusätzlichen Kunststoffdeckel auf, der als separates Bauteil gefertigt ist und den Führungskanal an einer offenen Seite gegenüber dem Innenraum zumindest abschnittsweise abschließt. Durch diesen Kunststoffdeckel wird die Verriegelungsschiene allseitig geführt und zugleich verliersicher gehalten. Es ist hierbei möglich, dass der Kunststoffdeckel geklipst, geschweißt, geklebt oder eingeschraubt wird.

Zur Minimierung von Toleranzen bei der Führung der Verriegelungsschiene ist es bevorzugt, wenn an den Wänden des Führungskanals Führungsrippen angeformt sind. Die Führungsrippen erstrecken sich vorzugsweise senkrecht zu der Verschiebungsrichtung der Verriegelungsschiene.

Ein weiterer Gegenstand der Erfindung betrifft eine Schaltdombaueinheit für ein Schaltgetriebe eines Fahrzeugs mit einer Schaltwelle und einem Kunststoffschaltdomgehäuse. Die Schaltwelle ist in und/oder über das Kunststoffschaltdomgehäuse gelagert, wobei dieses als die zuvor beschriebene Kunststoffgetriebeabdeckung ausgebildet ist. Das Kunststoffschaltdomgehäuse kann als ein hochkomplexes, einstückiges Bauteil z.B. in einem Spritzgussverfahren gefertigt werden.

Bei einer bevorzugten Realisierung der Erfindung ist die Schaltwelle gegenüber einer Kopplungsöffnung des Kunststoffschaltdomgehäuses mit einem benachbarten Getriebegehäuse liegend angeordnet. Insbesondere bei dieser Realisierung ist die Verriegelungsschiene parallel zu der Schaltwelle ausgerichtet und wird von dieser mitgeführt und/oder die Arretierung ist in ihrer Längsrichtung senkrecht erstreckend zu der Schaltwelle positioniert.

Weitere Merkmale, Vorteile und Wirkungen der Erfindung ergeben sich aus der nachfolgenden Beschreibung eines bevorzugten Ausführungsbeispiels der Erfindung.

Gleiche oder einander entsprechende Teile sind jeweils mit gleichen bzw. einander entsprechenden Bezugszeichen versehen. Es wird unterstrichen, dass die Einzelbaugruppen oder Einzelkomponenten auch in anderen Vorrichtungen einsetzbar sind.

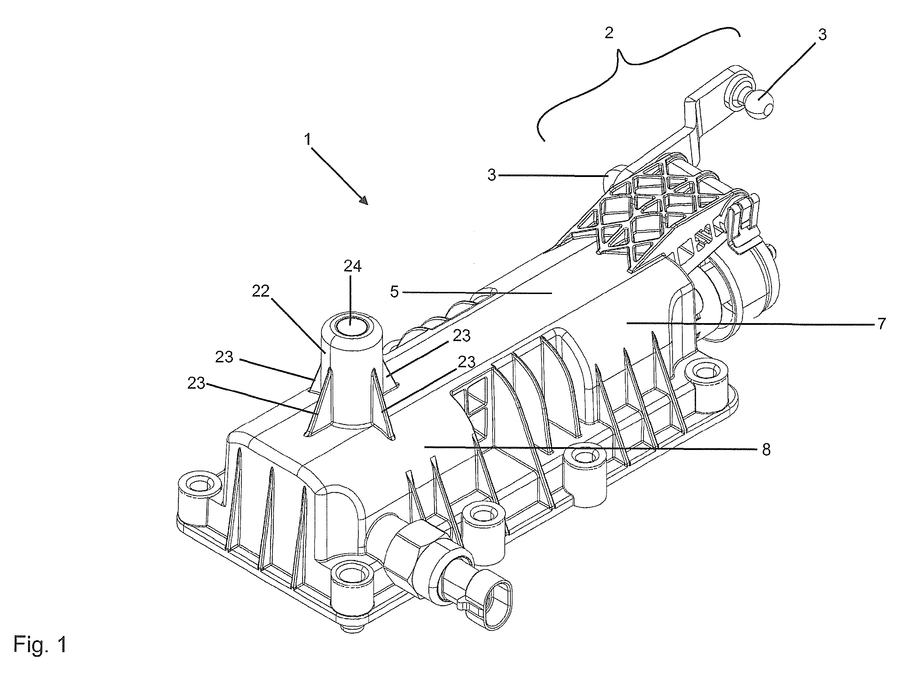

Die Figur 1 zeigt in einer schematisch dreidimensionalen Darstellung eine Schaltdombaueinheit 1 als ein Ausführungsbeispiel der Erfindung. Die Schaltdombaueinheit 1 ist ausgebildet, um eine Wähl- und/oder Schaltbewegung, welche von einem Benutzer oder einem Aktor eingeleitet wird, umzusetzen und an ein nachgeschaltetes Getriebe, insbesondere ein Zahnräderwechselgetriebe, weiterzugeben. Die Schaltdombaueinheit 1 ist insbesondere zur Verwendung in einem Kraftfahrzeug ausgebildet. Zum Einleiten der Schalt- und/oder Wählbewegungen zeigt die Schaltdombaueinheit 1 ein Hebelwerk 2, welches mechanische Schnittstellen, zum Beispiel in Form von Kugelköpfen 3 zur mechanischen Kopplung zum Beispiel mit Bowdenzügen oder Schaltstangen aufweist.

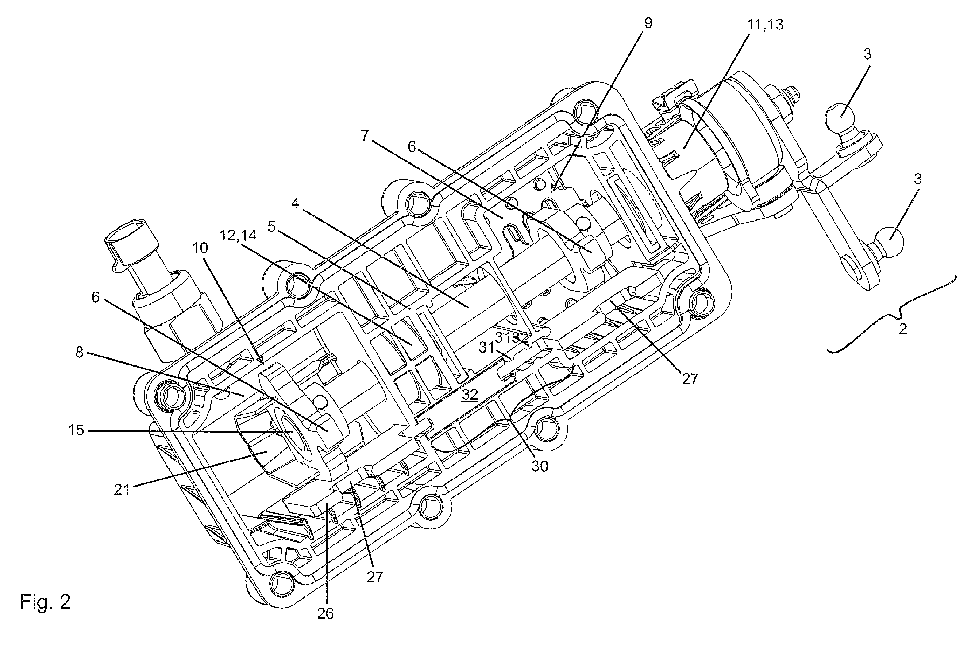

Die Wähl- und/oder Schaltbewegungen werden auf eine Schaltwelle 4 übertragen, welche in der Figur 2 zu erkennen ist.

Die Figur 2 zeigt die Schaltdombaueinheit 1 von der Unterseite ebenfalls in einer schematischen dreidimensionalen Darstellung. Die Schaltwelle 4 ist in einem Schaltdomgehäuse 5 bzw. über das Schaltdomgehäuse 5 hinsichtlich ihrer axialen Erstreckung verschiebbar und schwenkbar gelagert. Das Schaltdomgehäuse 5 ist aus Kunststoff ausgebildet und vorzugsweise im Kunststoffspritzguss hergestellt. An der Schaltwelle 4 sind Schaltingerabschnitte 6 befestigt, welche die mittlerweile umgesetzte Schalt- und/oder Wählbewegung auf nicht dargestellte Schaltschienen oder andere Elemente überträgt. Die Schaltschienen erstrecken sich senkrecht zu der Schaltwelle 4, so dass diese bei einer Schwenkbewegung der Schaltfingerabschnitte 6 um die eigene Längsachse in Längsrichtung der Schaltschienen verschoben werden. Die Schaltfingerabschnitte 6 können wahlweise unmittelbar an die Schaltschienen oder über Mitnehmerelemente an den Schaltschienen angreifen. Beispielsweise sind jedem Schaltfingerabschnitt 6 mehrere Schaltschienen, zum Beispiel drei Schaltschienen, zugeordnet, welche in Abhängigkeit der axialen Lage der Schaltwelle 4 von den Schaltfingerabschnitten 6 selektiv betätigt werden und denen - insbesondere bis auf dem Rückwärtsgang - jeweils zwei wählbare Gänge, zum Beispiel erster zweiter Gang oder dritter vierter Gang zugeordnet sind.

Das Schaltdomgehäuse 5 weist zwei voneinander räumlich getrennte Kammerbereiche 7 und 8 auf, durch bzw. in die sich die Schaltwelle 4 erstreckt. In dem ersten Kammerbereich 7, durch den sich die Schaltwelle 4 vollständig oder durchgehend erstreckt, ist eine Kulissenanordnung 9 realisiert, die eine Zwangs- oder Kulissenführung der Schaltwelle 4 hinsichtlich der Verschiebeund/oder Schwenkbewegungen definiert. Im zweiten Kammerbereich 8 ist eine Rastanordnung 10 positioniert, welcher ein Einrasten der Schaltwelle 4 bei bestimmten Positionen, insbesondere bei zu einem gewählten und/oder eingelegten Gang korrespondierenden Positionen umsetzt. Zudem wird durch die Rastanordnung 10 die aufzuwendende Schalt- bzw. Wählkraft gesteuert. Im zweiten Kammerbereich 8 endet die Schaltwelle 4 mit einem freien, ungelagerten Ende 15.

Die Schaltwelle 4 ist über zwei Lagerbereiche 11, 12 gelagert, wobei der erste Lagerbereich 11 im Bereich einer Durchgangsöffnung 13 in dem Schaltdomgehäuse 5 und der zweite Lagerbereich 12 in einem Zwischensteg 14 zwischen dem ersten Kammerbereich 7 und dem zweiten Kammerbereich 8 angeordnet ist. Durch diese Lageranordnung ist die Schaltwelle 4 im Hinblick auf das freie Ende 15 im Bereich der Rastanordnung 10 fliegend gelagert.

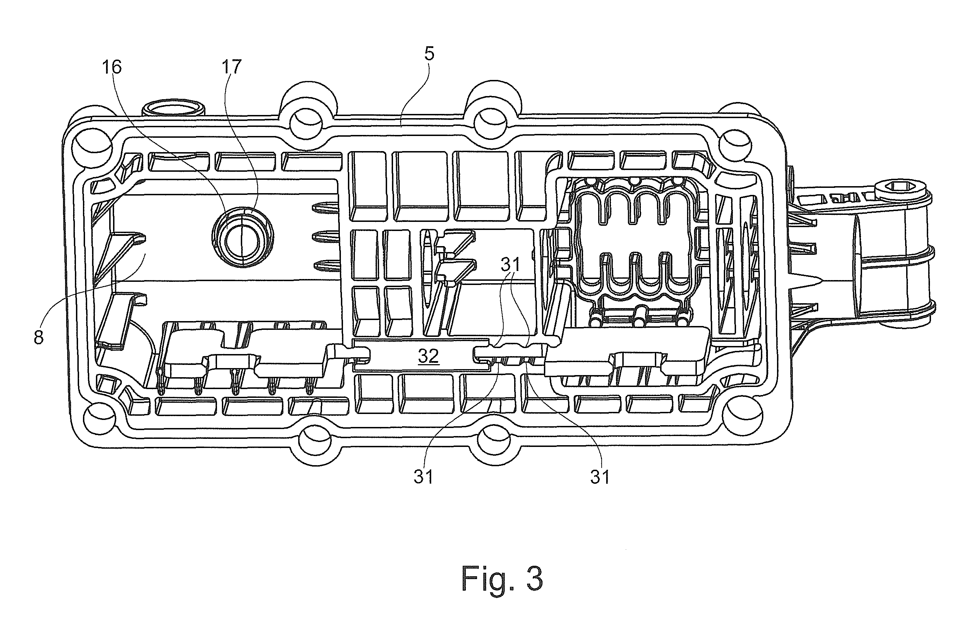

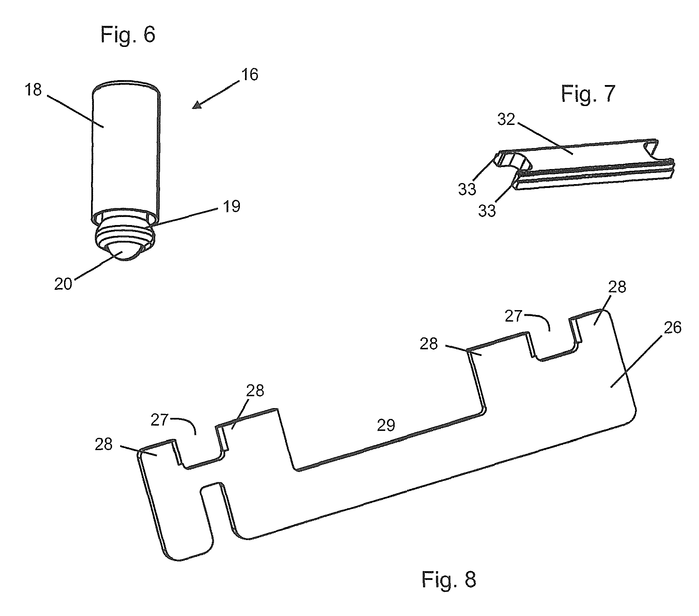

Die Figur 3 zeigt das einstückige Schaltdomgehäuse 5 in einer isometrischen schematischen Darstellung von der Unterseite. Nachdem in der Figur 3 eine Mehrzahl von Komponenten der Schaltbaueinheit 1 zeichnerisch unterdrückt wurden, ist in dem zweiten Kammerbereich 8 eine Arretierung 16 zu erkennen, welche in eine Halterung 17, die eine Aufnahme für die Arretierung 16 bildet, eingepresst ist. Die Arretierung 16 ist in der Figur 6 in einer schematischen dreidimensionalen Zeichnung als Einzelbaugruppe dargestellt. Die Arretierung 16 umfasst einen stationären hülsenförmigen Abschnitt 18, in dem ein Tastelement 19 gelagert ist, welches eine drehbar gelagerte Kugel 20 an dem freien Ende hält. Das Testelement 19 ist in dem stationären Abschnitt 18 als bewegbarer Abschnitt längsverschiebbar entlang der Längserstreckung der Arretierung 16 unter Vorspannung angeordnet, sodass das Tastelement 19 aus bzw. von dem stationären Abschnitt 18 weggedrückt wird. Mit der Kugel 20 fährt die Arretierung 16 ein Rastblech 21 (Figur 2) ab, welches an dem freien Ende 15 der Schaltwelle 4 auf dem Schaltfingerabschnitt 6 angeordnet ist. Das Rastblech 21 weist eine dreidimensionale Kontur auf, wobei die Kontur so gewählt ist, dass im Zusammenspiel zwischen Rastblech 21 und Arretierung 16 sich Rastbereiche bzw. Bereiche mit erhöhtem Schalt- und/oder Wählwiderstand ergeben.

Wie der Figur 1 zu entnehmen ist, wird die Halterung 17 durch einen turmartig aus dem Schaltdomgehäuse 5 auskragenden Aufnahmekörper 22 gebildet, welcher einstückig und/oder einmaterialig mit dem Schaltdomgehäuse 5 verbunden ist. Zur seitlichen Abstützung des Aufnahmekörpers 22 sind an diesen Stützflügel 23 angeformt. Der Aufnahmekörper 22 bzw. die Halterung 17 ist sacklochartig ausgebildet, wobei der Deckenbereich 24 des Aufnahmekörpers 22 einstückig und einmaterialig eingeformt ist. Eine Bestückung der Halterung 17 mit der Arretierung 16 kann nur ausgehend von dem Innenraum des Schaltdomgehäuses 5 erfolgen,

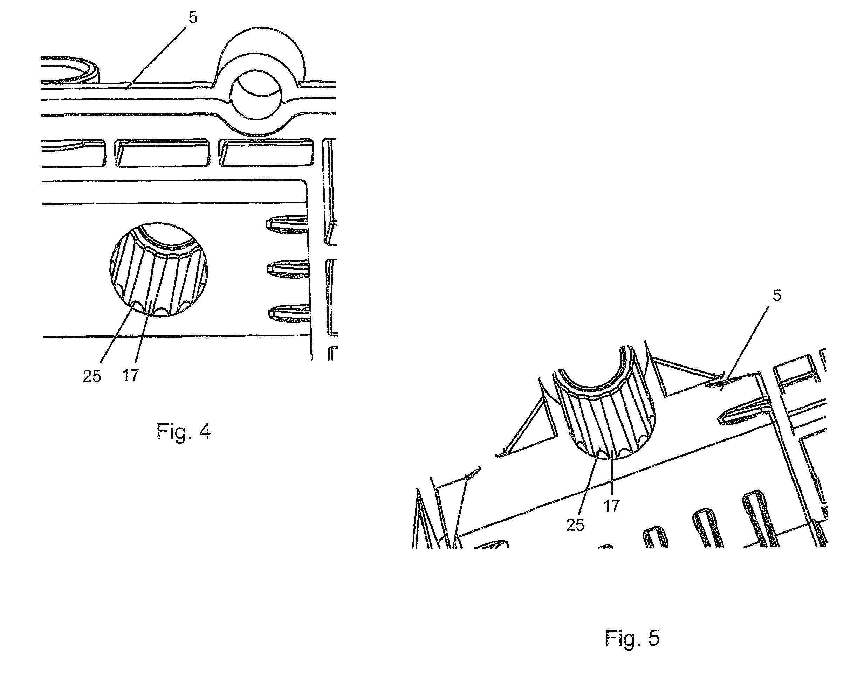

Wie sich aus den Figuren 4 und 5 ergibt, welche beide eine schematische dreidimensionale Darstellung der Halterung 17 ausgehend von dem Innenraum des Schaltdomgehäuses 5 zeigen, ist an den Innenwänden des Aufnahmekörpers 22 eine Mehrzahl von Klemmrippen 25 angeformt, so dass die Halterung 17 im freien Durchmesser derart verjüngt ist, dass die Arretierung 16 im Bereich des stationären Abschnitts 18 kraft- und/oder reibschlüssig gehalten wird. Die Innenseite des Deckels 24 kann einen Endanschlag für die Arretierung 16 bilden; alternativ ist in dem Aufnahmekörper 22 ein anderer Endanschlag vorgesehen. Zwischen den Klemmrippen 25 sind Endlüftungskanäle vorgesehen, welche analog wie die Klemmrippen 25 in Längserstreckung des Aufnahmekörpers 22 bzw. der Arretierung 16 verlaufen und die eine Entlüftung der Halterung 17 im Bereich unter dem Deckel 24 in den Innenraum des Schaltdomgehäuses 5 gewährleisten.

Zurückkehrend zu der Figur 2 ist eine Verriegelungsschiene 26 dargestellt, welche parallel zu der Längserstreckung der Schaltwelle 4 verschiebbar angeordnet ist. Die Aufgabe der Verriegelungsschiene 26 ist es, von den zu betätigenden Schaltschienen jeweils eine Schaltschiene selektiv frei zu geben und die anderen zu sperren, um ein Schrägschalten zu unterbinden. Die Verriegelungsschiene 26 ist in einer Einzeldarstellung in einer schematischen dreidimensionalen Darstellung in der Figur 8 dargestellt. Aus der Zusammenschau aus den Figuren 2 und 8 sind Randaussparungen 27 zu entnehmen, welche von dem Schaltdomgehäuse 5 abgewandt in die Verriegelungsschiene 26 eingebracht sind. Diese Randaussparungen 27 bilden den Bereich, durch den sich eine der Schaltschienen frei bewegen kann, wobei die umliegenden Bereiche 28 eine Sperre für die nicht zu betätigenden Schaltschienen bilden. Der Mittelteil 29 der Verriegelungsschiene 26 ist senkrecht zur Längserstreckung schmal ausgebildet, wobei die Verriegelungsschiene 26 in einem Führungskanal 30 in dem Schaltdomgehäuse 5 im Bereich des Mittelteils 29 geführt.

Der Führungskanal 30 ist als eine weitere Aufnahme einstückig in das Schaltdomgehäuse 5 eingeformt und kann ähnlich wie die Halterung 17 bei der Fertigung des Schaltdomgehäuses, insbesondere bei einem Spritzgussverfahren, im Rahmen des Urformvorgangs geschaffen werden. An den Wänden des Führungskanals 30 sind beidseitig Führungsrippen 31 angeformt, welche eine toleranzarme Führung der Verriegelungsschiene 26 gewährleisten.

Um ein Herausfallen der Verriegelungsschiene 26 aus dem Führungskanal 30 zu verhindern, ist die offene Seite des Führungskanals 30 zumindest abschnittsweise durch einen Deckel 32 verschlossen, welcher beispielsweise aufgeschweißt, aufgeklebt oder eingeschraubt werden kann. durch den Deckel 32 wird eine allseitige Führung der Verriegelungsschiene 26 im Mittelteil 29 umgesetzt, so dass diese verliersicher gehalten wird.

Zu unterstreichen ist, dass weder durch den Führungskanal 30 noch durch die Halterung 17 Durchgangsöffnungen von dem Innenraum des Schaltdomgehäuses und somit dem Getrieberaum zu einem Umgebungsraum außerhalb der Ölsumpfatmosphäre geschaffen werden. Stattdessen sind diese beiden Aufnahmen 17, 30 ausschließlich nach innen in den Innenraum geöffnet.

Die Figur 7 zeigt den Deckel 32, welcher an den Längsseiten jeweils Absätze 33 aufweist, welche eine einfache Positionierung in dem Führungskanal 30 verbessert.

**Bezugszeichenliste**

| | | | |
|---|---|---|---|
| 1 | Schaltdombaueinheit | 32 | Deckel |
| 2 | Hebelwerk | 33 | Absätze |
| 3 | Kugelköpfe | | |
| 4 | Schaltwelle | | |
| 5 | Schaltdomgehäuse | | |
| 6 | Schaltfingerabschnitte | | |
| 7 | erster Kammerbereich | | |
| 8 | zweiter Kammerbereich | | |
| 9 | Kulissenanordnung | | |
| 10 | Rastanordnung | | |
| 11 | erster Lagerbereich | | |
| 12 | zweiter Lagerbereich | | |
| 13 | Durchgangsöffnung | | |
| 14 | Zwischensteg | | |
| 15 | freies Ende | | |
| 16 | Arre | | |
| 17 | Halterung | | |
| 18 | hülsenförmiger Abschnitt | | |
| 19 | Tastelement | | |
| 20 | Kugel | | |
| 21 | Rastblech | | |
| 22 | Aufnahmekörper | | |
| 23 | Stützflügel | | |
| 24 | Deckenbereich, | | |
| 25 | Klemmrippen | | |
| 26 | Verriegelungsschiene | | |
| 27 | Randaussparungen | | |
| 28 | Bereiche | | |
| 29 | Mittelteil | | |
| 30 | Führungskanal | | |
| 31 | Führungsrippen | | |

## Patentansprüche

1. Kunststoffgetriebeabdeckung (5) zur Abdeckung eines Schaltgetriebes eines Fahrzeugs mit einem Gehäuseabschnitt, wobei der Gehäuseabschnitt einen Innenraum des Schaltgetriebes von einem Umgebungsraum trennt und wobei der Gehäuseabschnitt eine Aufnahme (17) für eine Funktionseinheit (16, 26) des Schaltgetriebes bildet, welche zumindest abschnittsweise bei einem Wähl- und/oder Schaltvorgang des Schaltgetriebes bewegt wird, wobei die Aufnahme (17) einstückig in den Gehäuseabschnitt eingebracht ist und sich ausschließlich zu dem Innenraum öffnet, und wobei die Funktionseinheit durch eine Arretierung (16) zur Arretierung einer Schaltwelle (4) ausgebildet ist, **dadurch gekennzeichnet, dass** an den Wänden der Aufnahme (17) eine Mehrzahl von Klemmrippen (25) angeformt sind, welche die Arretierung (16) kraftund/oder reibschlüssig halten.

2. Kunststoffgetriebeabdeckung (5) nach Anspruch 1, **dadurch gekennzeichnet, dass** die Arretierung (16) als eine Baugruppe ausgebildet ist, wobei ein bewegbarer Abschnitt (19) der Arretierung (16) in oder an einem stationären Abschnitt (18) der Arretierung (16) angeordnet ist.

3. Kunststoffgetriebeabdeckung (5) nach einem der vorhergehenden Ansprüche, **dadurch gekennzeichnet, dass** die Aufnahme (17) sacklochartig ausgebildet ist und/oder eine hohlzylindrische und/oder konusförmige Halterung bildet.

4. Kunststoffgetriebeabdeckung (5) nach einem der vorhergehenden Ansprüche, **dadurch gekennzeichnet dass** der Gehäuseabschnitt zur Bildung der Aufnahme (17) insbesondere turmartig in den Umgebungsraum auskragend ausgebildet ist.

5. Kunststoffgetriebeabdeckung (5) nach einem der vorhergehenden Ansprüche, **dadurch gekennzeichnet, dass** die Klemmrippen (25) zur Entlüftung der Aufnahme (17) angeordnet sind.

6. Schaltdombaueinheit (1) für ein Schaltgetriebe eines Fahrzeugs mit einer Schaltwelle (4) und einem Kunststoffschaltdomgehäuse, wobei die Schaltwelle (4) in und/oder über das Kunststoffschaltdomgehäuse gelagert ist, **dadurch gekennzeichnet, dass** das Kunststoffschaltdomgehäuse als die Kunststoffgetriebeabdeckung (5) nach einem der vorhergehenden Ansprüche ausgebildet ist.

## Claims

1. Plastic transmission cover (5) for covering a gear-shift transmission of a vehicle with a housing portion, the housing portion separating an inner space of the gear-shift transmission from a surrounding space, and the housing portion forming a receptacle (17) for a functional unit (16, 26) of the gear-shift transmission, which functional unit is moved at least partially during a selecting and/or shifting operation of the gear-shift transmission, the receptacle (17) being introduced in one piece into the housing portion and opening solely towards the inner space, and the functional unit being formed by a detent (16) for the detention of a gear-shift shaft (4), **characterized in that** a plurality of clamping ribs (25), which hold the detent (16) non-positively and/or frictionally, are integrally formed on the walls of the receptacle (17).

2. Plastic transmission cover (5) according to Claim 1, **characterized in that** the detent (16) is formed as a subassembly, a movable portion (19) of the detent (16) being arranged in or on a stationary portion (18) of the detent (16).

3. Plastic transmission cover (5) according to one of the preceding claims, **characterized in that** the receptacle (17) is formed in the manner of a blind hole and/or forms a hollow-cylindrical and/or conical holding device.

4. Plastic transmission cover (5) according to one of the preceding claims, **characterized in that,** to form the receptacle (17), the housing portion is designed, in particular, to project in the manner of a tower into the surrounding space.

5. Plastic transmission cover (5) according to one of the preceding claims, **characterized in that** the clamping ribs (25) are arranged for the purpose of ventilating the receptacle (17).

6. Gear-shift tower unit (1) for a gear-shift transmission of a vehicle, with a gear-shift shaft (4) and with a plastic gear-shift tower housing, the gearshift shaft (4) being mounted in and/or above the plastic gear-shift tower housing, **characterized in that** the plastic gear-shift tower housing is designed as the plastic transmission cover (5) according to one of the preceding claims.

## Revendications

1. Couvercle de boîte de vitesses en plastique (5) pour recouvrir une boîte de vitesses d'un véhicule, comprenant une portion de boîtier, la portion de boîtier séparant un espace intérieur de la boîte de vitesses d'un espace environnant, et la portion de boîtier formant un logement (17) pour une unité fonctionnelle (16, 26) de la boîte de vitesses, laquelle unité fonctionnelle est déplacée au moins en partie lors d'une opération de sélection de vitesse et/ou de changement de vitesse de la boîte de vitesses, le logement (17) étant ménagé d'une seule pièce dans la portion de boîtier et s'ouvrant exclusivement sur l'espace intérieur, et l'unité fonctionnelle étant réalisée par un dispositif de verrouillage (16) pour le verrouillage d'un arbre de changement de vitesse (4), **caractérisé en ce qu**'une pluralité de nervures de serrage (25) sont formées sur les parois du logement (17), lesquelles retiennent le dispositif de verrouillage (16) par engagement par force et/ou par friction.

2. Couvercle de boîte de vitesses en plastique (5) selon la revendication 1, **caractérisé en ce que** le dispositif de verrouillage (16) est réalisé sous la forme d'un module, une portion mobile (19) du dispositif de verrouillage (16) étant disposée dans ou sur une portion fixe (18) du dispositif de verrouillage (16).

3. Couvercle de boîte de vitesses en plastique (5) selon l'une quelconque des revendications précédentes, **caractérisé en ce que** le logement (17) est réalisé en forme de trou borgne et/ou forme un support cylindrique creux et/ou en forme de cône.

4. Couvercle de boîte de vitesses en plastique (5) selon l'une quelconque des revendications précédentes, **caractérisé en ce que** la portion de boîtier est, pour former le logement (17), réalisée en particulier en forme de tour, de manière saillante dans l'espace environnant.

5. Couvercle de boîte de vitesses en plastique (5) selon l'une quelconque des revendications précédentes, **caractérisé en ce que** les nervures de serrage (25) sont disposées en vue de la ventilation du logement (17).

6. Unité structurale de dôme de changement de vitesse (1) pour une boîte de vitesses d'un véhicule comprenant un arbre de changement de vitesse (4) et un boîtier de dôme de changement de vitesse en plastique, l'arbre de changement de vitesse (4) étant monté dans et/ou sur le boîtier de dôme de changement de vitesse en plastique, **caractérisée en ce que** le boîtier de dôme de changement de vitesse en plastique est réalisé sous la forme du couvercle de boîte de vitesses en plastique (5) selon l'une quelconque des revendications précédentes.
